# FASCICULE DE BREVET EUROPEEN

(11) **EP 2 335 321 B1**
(45) Date de publication et mention de la délivrance du brevet: **11.03.2020**
(21) Numéro de dépôt: 09783742.1
(22) Date de dépôt: 05.10.2009
(51) Int. Cl.: H01R 9/26, H02H 3/02

(54) **DISPOSITIF ET PROCEDE DE DÉTECTION D'UNE DÉFAILLANCE DANS UN RESEAU ELECTRIQUE MOYENNE, HAUTE OU TRES HAUTE TENSION**
EINRICHTUNG UND VERFAHREN ZUM SCHUTZ EINER VERBINDUNG IN EINEM MITTEL-, HOCH- ODER HÖCHSTSPANNUNGS-STROMNETZ
DEVICE AND METHOD FOR DETECTING A FAULT IN A MEDIUM-, HIGH- OR VERY HIGH-VOLTAGE ELECTRIC NETWORK

(30) Priorité: 07.10.2008 FR 0856793
(43) Date de publication de la demande: 22.06.2011
(73) Titulaire: Areva T&D Protection & Controle, 34970 Lattes (FR); ALSTOM Technology Ltd, 5400 Baden (CH)
(72) Inventeur: MARMONIER, Jean, F-34130 Saint Aunes (FR)
(74) Mandataire: Ilgart, Jean-Christophe
(86) Numéro de dépôt international: PCT/EP2009/062903
(87) Numéro de publication internationale: WO 2010/040713

(56) Documents cités:
- EP-A- 0 369 916
- EP-A- 1 640 825
- DE-B3-102005 025 108
- FR-A- 2 062 734
- FR-A- 2 202 378
- GB-A- 1 574 205
- US-A- 5 775 955
- US-A1- 2004 252 421
- US-B1- 6 324 063

## Description

### DOMAINE TECHNIQUE

L'invention concerne un dispositif et un procédé de détection d'une défaillance dans un réseau électrique moyenne, haute ou très haute tension.

### ETAT DE LA TECHNIQUE ANTERIEURE

Le domaine de l'invention est celui des dispositifs de protection de circuits électriques, et, plus précisément, des dispositifs de protection de liaisons (lignes aériennes, câbles ou liaisons aérosouterraines, départ transformateur, moteur, etc...) des réseaux électriques moyenne, haute et très haute tension.

Ces dispositifs de protection ont pour particularité de mesurer en permanence les courants et tensions secondaires délivrés par des transformateurs de courant et de tension installés sur les conducteurs moyenne, haute et très haute tension.

Les données électriques sont prélevées sous format analogique sur une pluralité de transformateurs disposés sur le réseau électrique, puis transmises au dispositif de protection par l'intermédiaire de cables basse tension, et enfin converties en format numérique à l'intérieur de ces dispositifs de protection.

Ces dispositifs de protection utilisent des programmes de calcul pour comparer à un instant donné les données électriques mesurées avec des données électriques de référence propres à un schéma électrique déterminé.

En cas de défaillance détectée par un dispositif de protection, celui-ci donne l'ordre d'ouverture ou de fermeture d'interrupteurs ou de disjoncteurs pour sécuriser le réseau électrique.

L'ensemble des informations analogiques ainsi transmises transite typiquement par une boite d'essais interface . Une telle boite d'essai permet de tester les fonctionnalités de la protection. Une telle boite d'essais doit être conçue pour assurer en toute sécurité les opérations de connexion et de déconnexion de la prise d'essai associée pour éviter tout déclenchement intempestif des interrupteurs ou disjoncteurs, ou toute mise en danger de l'opérateur.

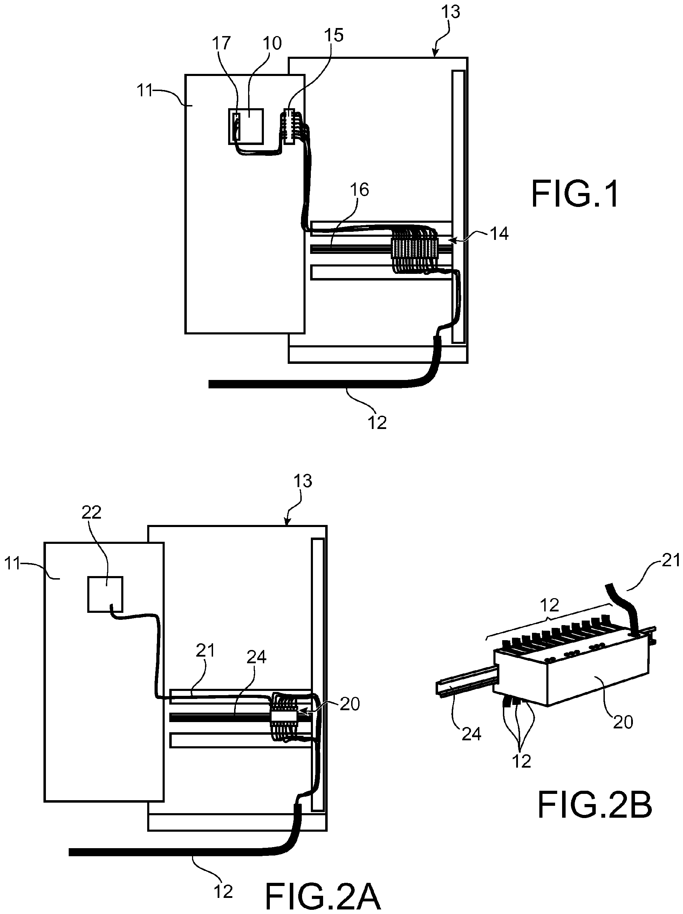

Dans un exemple de réalisation typique illustré sur la figure 1, un dispositif ou relais de protection 10 est installé sur la porte ou le châssis pivotant 11 d'une armoire électrique 13. Les câbles basse tension 12 ramenant les informations issues des transformateurs de courant et de tension et transmettant les ordres de déclenchement aux disjoncteurs arrivent de façon typique par le fond de l'armoire 13. Ils sont câblés sur un bornier intermédiaire 14, dont les des bornes sont montées ici sur un rail DIN (rail normalisé) 16. Ce bornier 14 est raccordé à une boîte d'essai 15, qui est raccordée en arrière du relais de protection 10 par des connecteurs débrochables 17.

Une version déportée sur rail DIN de l'acquisition des courants et tension, comme illustrée sur les figures 2A et 2B, permet de réduire les coûts de câblage de façon significative grâce au câblage direct du relais de protection, ou unité centrale de traitement, 22 sur une unité d'acquisition déportée 20. Cette unité d'acquisition 20, qui réalise la conversion analogique numérique, est montée sur un rail DIN 24. Elle réalise l'acquisition des courants et tension, grâce à un raccordement direct aux cables 12 (liaisons analogiques) à la tension d'alimentation, aux transformateurs de courant, de tension et aux circuits de déclenchement, pour les transmettre via une liaison numérique 21 au boitier 22, qui réalise la surveillance des courants et tension et prend la décision de déclencher, et de donner en retour l'ordre de déclenchement à un disjoncteur. Ce boitier 22 peut contenir en face avant l'interface de communication avec l'opérateur (affichage des grandeurs courant et tension mesurées, compte rendu des évènements lors d'un déclenchement, clavier pour programmer le dispositif, etc...). Ce boitier 22 peut également être intégré dans l'unité d'acquisition 20.

Une telle version permet une réduction de coût importante, tant du point de vue matériel que du point de vue du temps de câblage, et une amélioration de la sûreté de fonctionnement grâce à la réduction du nombre de points de connexion électrique. Mais elle présente l'inconvénient de rendre impossible des essais fonctionnels de la protection.

De tels essais fonctionnels sont traditionnellement réalisés par l'intermédiaire d'une boîte d'essai, comme décrit ci-dessus et dans le document référencé [1] en fin de description. Une telle boîte d'essai, en fonctionnement normal, assure la continuité des circuits courant, tension et déclenchement. Lorsque une prise d'essai est insérée, le mouvement d'insertion ouvre le circuit de déclenchement (le relais de protection ne peut plus envoyer d'ordre de déclenchement au disjoncteur), puis effectue la refermeture sur eux-mêmes des circuits courants afin d'éviter toute ouverture du circuit courant, ouverture présentant entre autres des risques d'électrisation de l'opérateur, et enfin effectue l'isolement de la protection des circuits courant et tension. Il est alors possible, en raccordant sur la prise d'essai un dispositif d'injection courant et tension via des cordons, de tester le fonctionnement du relais en étant isolé des transformateurs de courant et de tension et sans provoquer le déclenchement du disjoncteur.

Dans la solution illustrée sur la figure 2, de tels essais fonctionnels du relais de protection 22 par injection secondaire ne peuvent être réalisés, puisqu'il n'est pas possible d'insérer une boite d'essai entre le relais de protection 22 et les circuits transformateur courant, transformateur tension, le câblage étant par définition direct.

Le document US2004252421 décrit un dispositif de protection contre un surcharge d'un moteur.

Le document US6324063 décrit un module décentralisée pour la connexion et la distribution de lignes de signaux.

Le document EP1640825 décrit un dispositif électrique avec un module électrique pour la communication entre ledit module et au autre dispositif électrique.

Le document EP0369916 décrit un Appareil modulaire pour la régulation de grandeurs physiques.

Le document GB1574205 décrit un dispositif de connexion électrique par enfichage.

Le document FR2202378 décrit une barrette à bornes déconnectable.

Le document DE 10 2005 025 108 décrit un dispositif pour tester la protection, pour mesurer ou pour compter des équipements moyenne ou haute tension, comportant une bande de pôles pouvant être fixée sur ce dispositif, la bande de pôles présentant plusieurs orifices de pôles disposés l'un derrière l'autre.

L'invention a pour objet un dispositif et un procédé permettant de résoudre un tel problème de manière à permettre le remplacement de l'unité d'acquisition décentralisée en cas de défaillance, ainsi que la réalisation d'essais fonctionnels avec injection secondaire.

### EXPOSE DE L'INVENTION

L'invention concerne un dispositif selon la revendication indépendante 1.

La partie active peut être reliée à l'unité centrale de traitement par une liaison numérique. Mais on note que, si la miniaturisation le permet, l'unité centrale peut être intégrée dans une unité d'acquisition déportée, ce qui supprime la liaison numérique. L'unité centrale peut être ainsi intégrée dans la partie active.

Avantageusement, la prise de la partie active peut être une prise sans contact, ou peut comprendre deux contacts permettant de récupérer la tension d'alimentation disponible sur la partie embase pour alimenter la partie active. Avantageusement, le dispositif de l'invention comprend des fiches aptes à venir s'insérer dans la partie test.

Dans un premier mode de réalisation, la partie embase est fixée à un rail DIN ou à tout dispositif de fixation connu.

Dans un second mode de réalisation, la partie active est montée en « rack » ou encastrée dans une tôle en face avant d'une armoire.

Le dispositif de l'invention permet, dans cette seconde solution de réalisation, de remplir à la fois une fonction boîte d'essai et une fonction débrochage.

La liaison peut être une liaison triphasée, un transformateur de courant, un transformateur de tension et un circuit de déclenchement étant disposés sur chaque phase.

Le dispositif de l'invention présente de nombreux avantages :

### - Réduction du coût du matériel

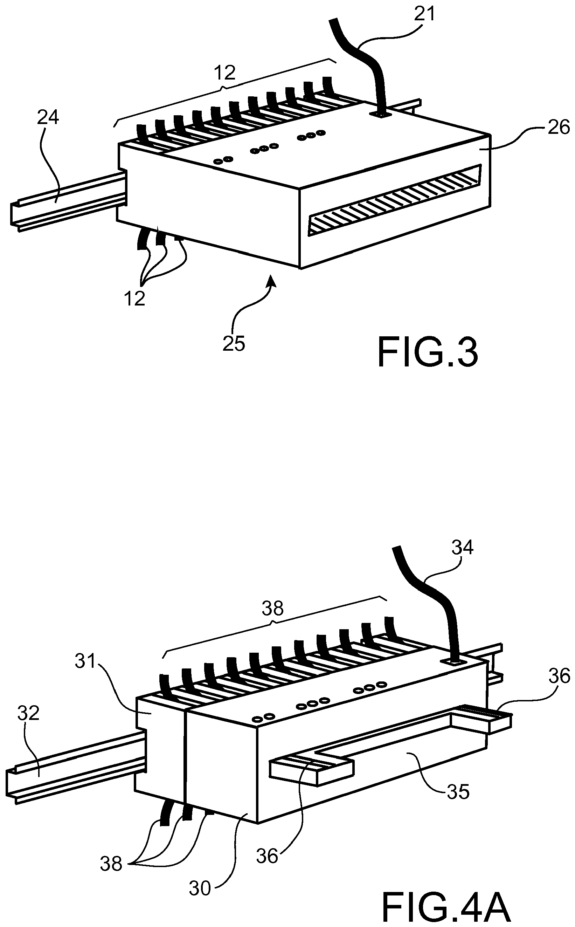

La solution proposée dans le premier mode de réalisation du dispositif de l'invention avec rail DIN illustrée sur les figures 4A à 5D permet de remplacer le bornier intermédiaire 14 et la boîte d'essai 15 par la connectique de la partie embase 31 du dispositif de l'invention.

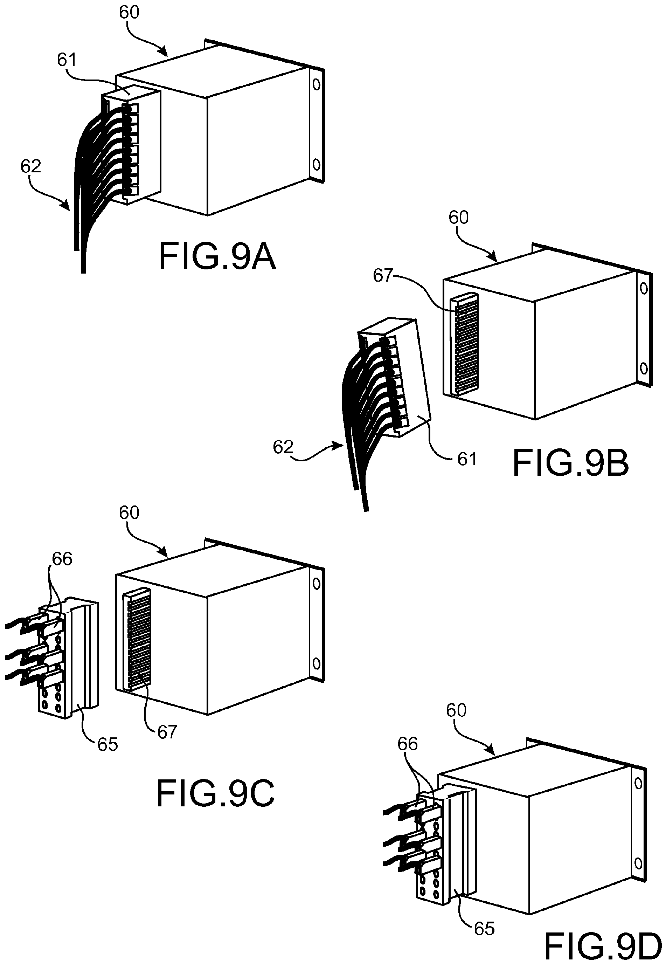

La solution proposée dans le second mode de réalisation du dispositif de l'invention avec montage en « rack » (tiroir extractible) illustrée sur les figures 9A à 9D permet la suppression de la boîte d'essai située entre le bornier interface et le dispositif de protection.

### - Réduction du coût du câblage

Si l'on considère un relais typique recevant trois courants de phase, trois tensions de phase et ayant trois circuits de déclenchement :
- La solution de l'art connu, illustrée sur la figure 1, nécessite 78 points de raccordement. De plus, la filerie entre le bornier intermédiaire 14 et une prise test, souvent installée sur un châssis pivotant, est difficile à réaliser.
- Le premier mode de réalisation du dispositif de l'invention avec rail DIN ou dispositif équivalent, illustré sur les figures 4A à 5D, nécessite 22 points de raccordement. 56 points de raccordement sont supprimés. Le gain en temps de câblage en armoire pour un relais de protection peut être estimé entre 6 et 8 heures.
- Le second mode de réalisation du dispositif de l'invention avec montage en « rack », illustré sur les figures 9A à 9D, nécessite 50 points de raccordement. 28 points de raccordement sont supprimés. Le gain en temps de câblage en armoire pour un relais de protection peut être estimé entre 3 et 4 heures.

### - Réduction du nombre de points de connexion électrique

Une telle réduction revêt d'autant plus d'importance si l'on sait :
- qu'une interruption d'un circuit courant (issu d'un transformateur de courant) représente un danger d'électrisation pour l'opérateur. Toute suppression de point de connectique apporte donc une amélioration en termes de sécurité,
- qu'une interruption du circuit de déclenchement provoque un non déclenchement du disjoncteur sur défaut, avec des conséquences importantes sur la sécurité du personnel, l'endommagement du matériel haute tension et le risque de perte de stabilité du réseau électrique.

Si l'on considère un relais typique recevant trois courants de phase, trois tensions phase et ayant trois circuits de déclenchement :
- La solution de l'art connu illustrée sur la figure 1 nécessite 78 points de connexion électrique fixes et 34 points de connexion électrique glissants (en comptant les raccordements et les points de contact de la prise test et de l'embase débrochable du relais de protection).
- Le premier mode de réalisation avec rail DIN nécessite 22 points de connexion électrique fixes (réduction de 70%) et 20 points de connexion électrique glissants (réduction de 41%).
- Le second mode de réalisation du dispositif de l'invention avec montage en « rack » nécessite 50 points de connexion électrique fixes (réduction de 35%) et 20 points de connexion électrique glissants (réduction de 41%).

### - Fonction débrochage à chaud

Le dispositif de l'invention permet de résoudre également le problème d'un débrochage à chaud, c'est-à-dire celui de pouvoir débrocher le relais de protection sans mettre celui-ci hors tension. Si aucune précaution n'est prise, il existe en effet un risque de déclenchement intempestif important lors d'un tel débrochage du fait de l'ouverture des circuits courant et tension qui n'est pas forcément synchronisée. Avec le dispositif de l'invention, lors du débrochage, le circuit déclenchement, qui est porté par le même connecteur que le connecteur des transformateurs de mesure, est ouvert avant l'ouverture des circuits des transformateurs de mesure. Tout risque de déclenchement intempestif est donc écarté.

L'invention concerne également un procédé selon la revendication indépendante 10.

Dans un mode de fonctionnement avantageux :
- on insère cette partie active permettant une conversion analogique-numérique dans une partie embase reliée à la tension d'alimentation, aux transformateurs de courant et de tension et aux circuits de déclenchement.

On peut relier, au préalable, cette partie active munie à l'unité centrale de traitement.

Avantageusement, dans une étape de test :
- on désinsère cette partie active de la partie embase,
- on retourne la partie active et on l'insère à nouveau dans la partie embase,
- on insère une partie test sur cette partie active.

Avantageusement, lorsque l'on débroche la partie active de la partie embase, les circuits de déclenchement sont interrompus dans un premier temps puis les circuits transformateurs de tension et de courant sont interrompus ensuite, les circuits courant étant également refermés sur eux-mêmes.

### BRÈVE DESCRIPTION DES DESSINS

- La figure 1 illustre un premier dispositif de l'art connu.
- Les figures 2A et 2B illustrent un second dispositif de l'art connu.
- La figure 3 illustre une première solution de réalisation du dispositif de l'invention.
- Les figures 4A à 4D et 5A à 5D illustrent un premier mode de réalisation d'une seconde solution de réalisation du dispositif de l'invention.
- Les figures 6A à 6C illustrent des détails de débrochage d'un circuit de déclenchement, dans ce premier mode de réalisation.
- Les figures 7A à 7C illustrent des détails de débrochage d'un circuit courant, dans ce premier mode de réalisation.
- Les figures 8A à 8C illustrent des détails de débrochage d'un circuit tension, dans ce premier mode de réalisation.
- Les figures 9A à 9D illustrent un second mode de réalisation d'une seconde solution de réalisation du dispositif de l'invention.
- Les figures 10A et 10B représentent le circuit électrique d'un dispositif de l'art connu.
- Les figures 11A à 11E représentent le circuit électrique du premier mode de réalisation du dispositif de l'invention.
- Les figures 12A à 12E représentent le circuit électrique du second mode de réalisation du dispositif.

### EXPOSÉ DÉTAILLÉ DE MODES DE RÉALISATION PARTICULIERS

Dans une première solution de réalisation du dispositif de l'invention illustrée sur la figure 3, pour résoudre le problème de la non réalisation des essais fonctionnels se posant dans le second dispositif de l'art connu illustré sur les figures 2A et 2B, on intégre la boîte d'essai dans l'unité d'acquisition décentralisée 25 de telle sorte qu'une fonctionnalité « essais par injection secondaire » puisse être assurée. L'unité d'acquisition décentralisée 25 comprend ainsi une fonction boîte d'essais intégrée 26. On retrouve sur cette figure les liaisons analogiques 12 et numérique 21 de la figure 2. Cette première solution résoud le problème des essais fonctionnels, mais ne permet pas le remplacement d'une unité d'acquisition 25 dans le cas d'une défaillance de celle-ci. Un tel remplacement ne peut être effectué sans consignation des circuits courant et tension (opération délicate nécessitant la mise hors tension de l'appareillage) puisque le relais de protection est intégré à la boîte d'essai. Pour résoudre ce problème, on peut prévoir une fonctionnalité de débrochage de la seule partie acquisition des courants et tension. Cependant, une telle solution a pour inconvénient d'engendrer un coût supplémentaire et l'ajout de points d'interface.

La seconde solution de réalisation du dispositif de l'invention permet de résoudre ces problèmes.

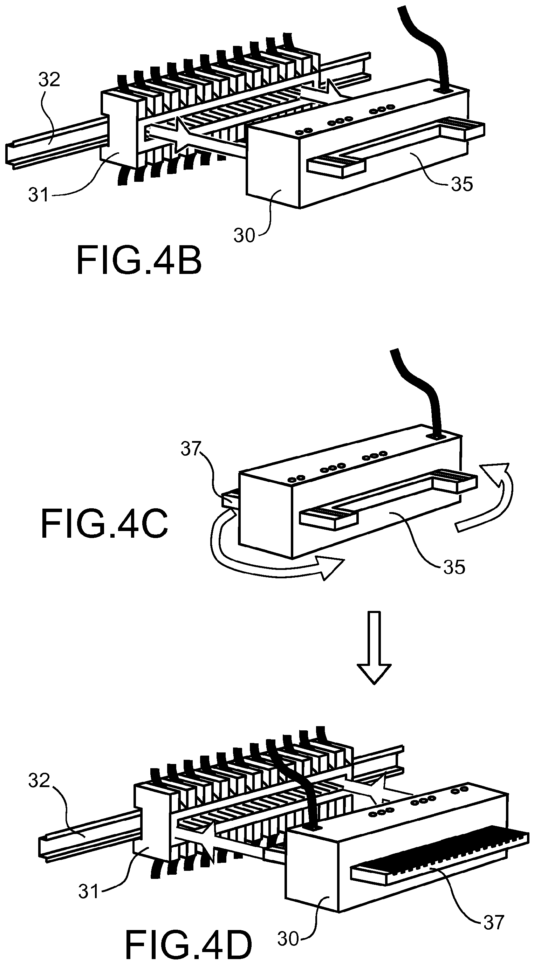

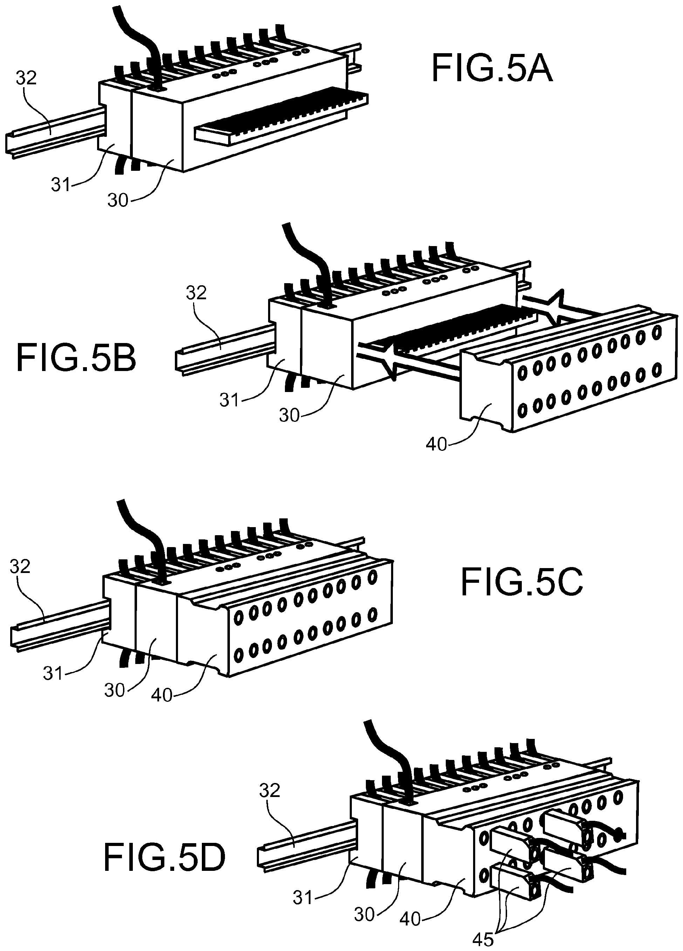

Dans un premier mode de réalisation représenté en fonctionnement normal sur les figures 4A à 4D et 5A à 5D, il comprend :
- une partie embase 31 fixée à un rail DIN 32 avec un raccordement direct, via des liaisons analogiques 38, à la tension d'alimentation, aux transformateurs de courant, et de tension et aux circuits de déclenchement,
- une partie active 30 réalisant la conversion analogique-numérique portant les contacts de déclenchement et comportant une liaison numérique 34 vers une unité centrale de traitement, qui réalise la surveillance des courants et tension et qui prend la décision de déclencher, et éventuellement une prise 35 destinée à être insérée, ou embrochée, dans la partie embase 31. Cette prise 35 peut être une prise sans contacts de manière à simplement maintenir en position le relais lors de l'insertion de la partie test 40. Elle peut également être équipée de deux contacts 36 permettant de récupérer la tension d'alimentation de la partie active 30 pour alimenter de nouveau celle-ci lorsqu'elle est embrochée selon la figure 4D.

Comme illustré sur la figure 4B, lorsque la partie active 30 est débrochée de la partie embase 31, les circuits de déclenchement sont déconnectés, puis la continuité du circuit courant est maintenue par une refermeture sur eux-mêmes de ces circuits, puis enfin les circuits courant, tension et les circuits de déclenchement sont déconnectés.

Comme illustré sur les figures 4C et 4D, une fois retirée, la partie active 30 est retournée (figure 4C) et embrochée, par sa prise 35, dans la partie embase 31, en position test. L'alimentation de la partie active 30 est de nouveau assurée et la partie active 30 est prête à recevoir la partie test 40.

En position test, le fait que l'alimentation de la partie test soit apportée par le ré-embrochage de la partie active 30 n'est pas obligatoire. C'est une variante avantageuse de réalisation. Il en est de même en ce qui concerne la notion de ré-embrochage de la partie active 30 dans la partie embase 31. Ce ré-embrochage présente l'intérêt de fixer la partie active 30 solidement dans la partie embase 31 avant l'insertion de la partie test 40. Ce n'est qu'une variante de réalisation.

Sur les figures 5A à 5D, la partie test 40 est insérée et les essais fonctionnels par injection secondaire à l'aide des fiches 45 peuvent être réalisés.

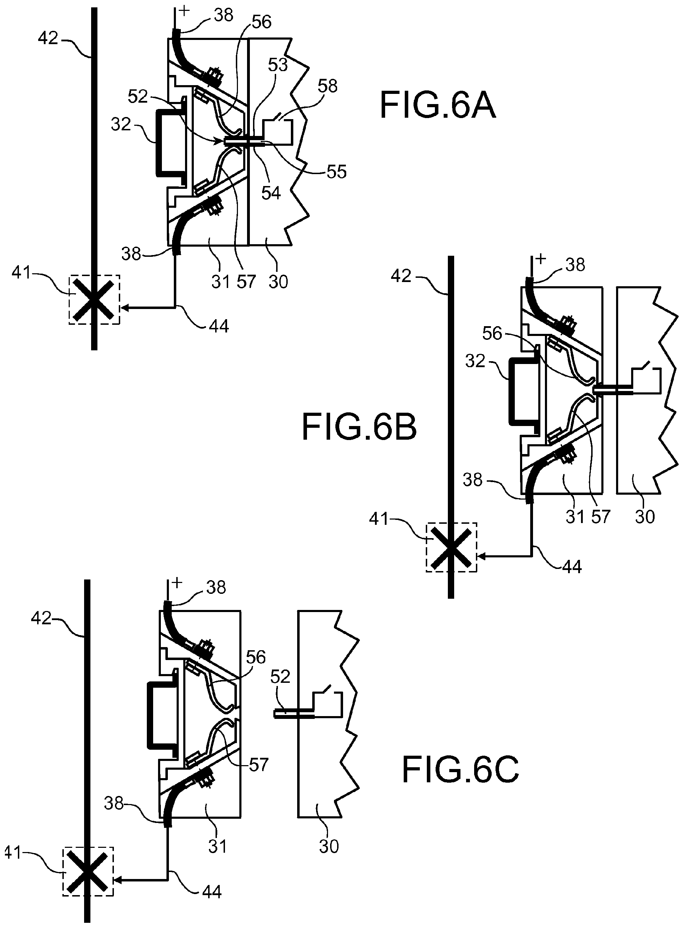

Les figures 6A à 6C illustrent des détails du débrochage d'un circuit de déclenchement, comme illustré sur la figure 4B, respectivement dans trois positions : embroché, milieu et débroché, de la partie active 30 par rapport à la partie embase 31, ce qui permet d'interrompre le circuit de déclenchement du disjoncteur 41 disposé sur une liaison 42, la référence 44 illustrant la liaison vers la bobine de déclenchement de ce circuit 41. Le circuit de déclenchement 44 du disjoncteur 41 est interrompu en premier, comme illustré sur la figure 6B, ceci grâce au fait que la fiche associée à ce circuit est plus courte que les fiches associées aux circuits courants et tension. Tout risque de déclenchement intempestif dû à un régime transitoire lors de la déconnexion des circuits courant et tension est ainsi éliminé.

Sur ces figures 6A à 6C est plus particulièrement représenté une broche 52 comprenant un contact haut 53 séparée d'un contact bas 54 par une partie intermédiaire 55 en isolant, le contact haut pouvant venir en contact avec une première lamelle souple 56, le contact bas pouvant venir en contact avec une seconde lamelle souple 57. Comme illustré sur ces figures, l'insertion-désinsertion de la broche à l'intérieur des lamelles 56, 57 permet d'insérer ou de désinsérer le circuit de déclenchement du disjoncteur 41.

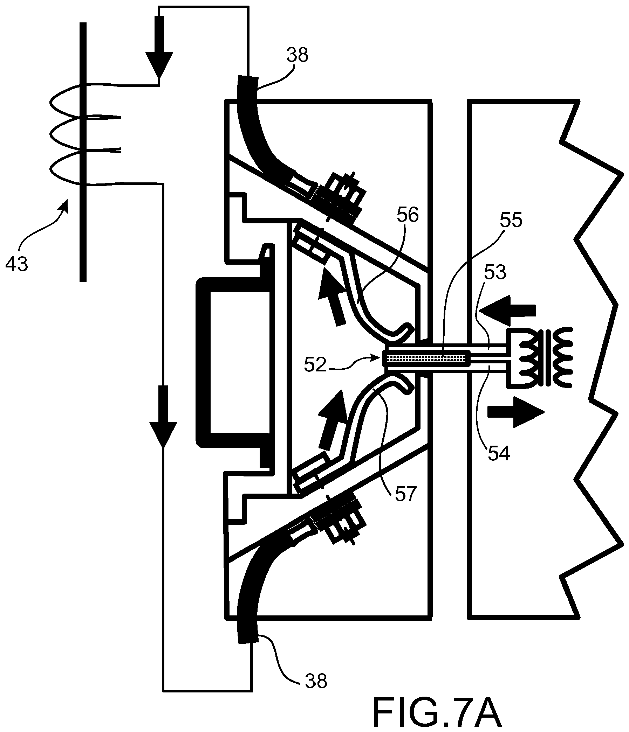

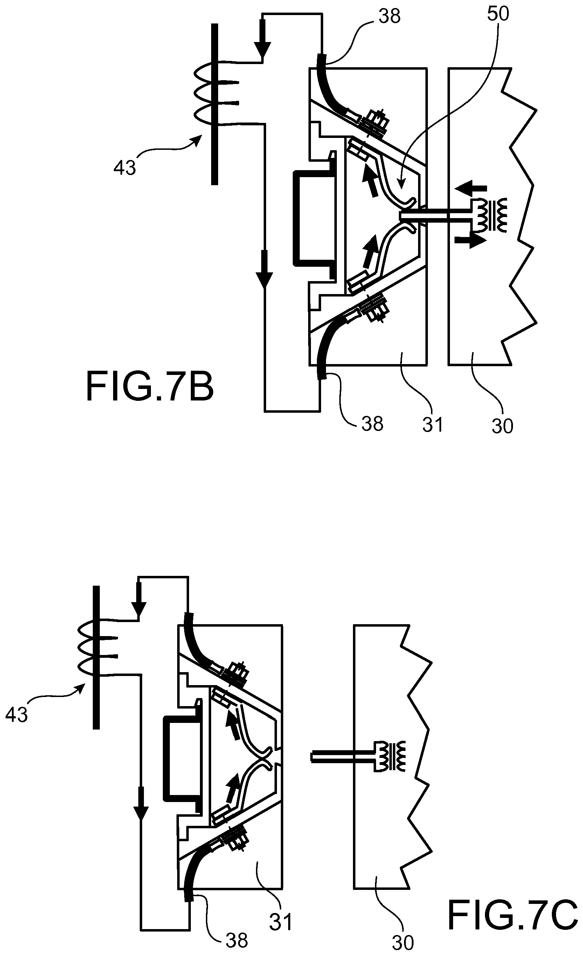

Les figures 7A à 7C illustrent des détails du débrochage d'un circuit courant 43 respectivement dans trois positions embroché, milieu et débroché de ce circuit courant. Comme illustré par la référence 50, la continuité du circuit est assurée lors du débrochage, les flèches illustrant la circulation du courant.

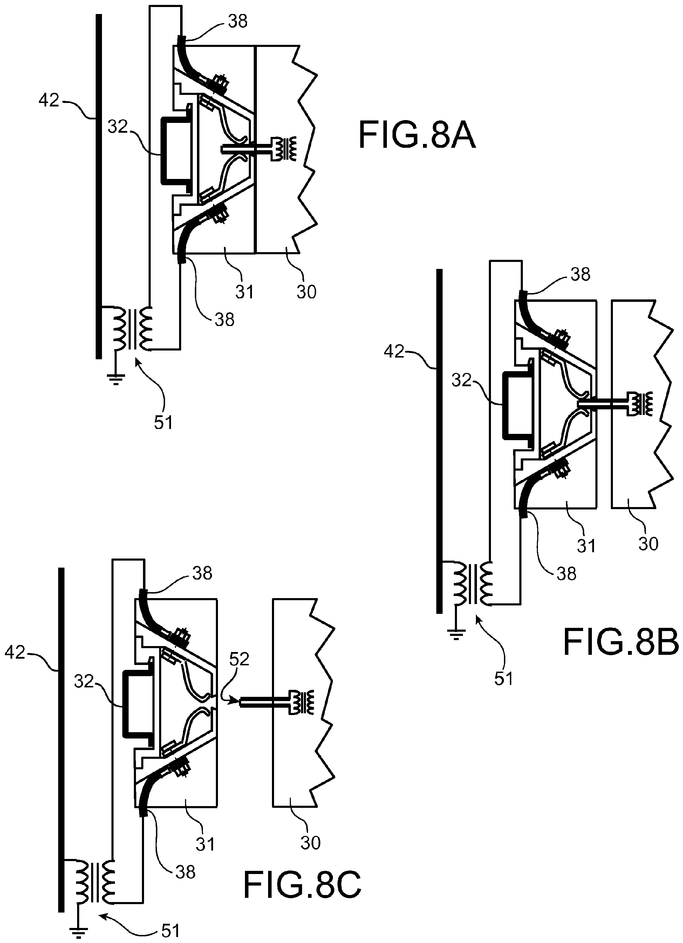

Les figures 8A à 8C illustrent un détail du débrochage d'un circuit tension 51 respectivement dans trois positions : embroché, milieu et débroché de ce circuit tension, de la même façon que pour le circuit de déclenchement illustré sur les figures 6A à 6C. Il faut toutefois remarquer que les contacts hauts et bas 53 et 54 illustrés sur les figures 6A à 6C sont plus courts que les contacts 53 et 54 illustrés sur les figures 7A à 7C et 8A à 8C de telle sorte qu'au débrochage de la partie active 30 les circuits de déclenchement sont interrompus dans un premier temps, puis les circuits transformateur tension et courant sont interrompus ensuite, le circuit courant étant également court-circuité avant la déconnexion de la partie 30.

Les figures 9A à 9D illustrent un second mode de réalisation avec un relais monté en « rack ».

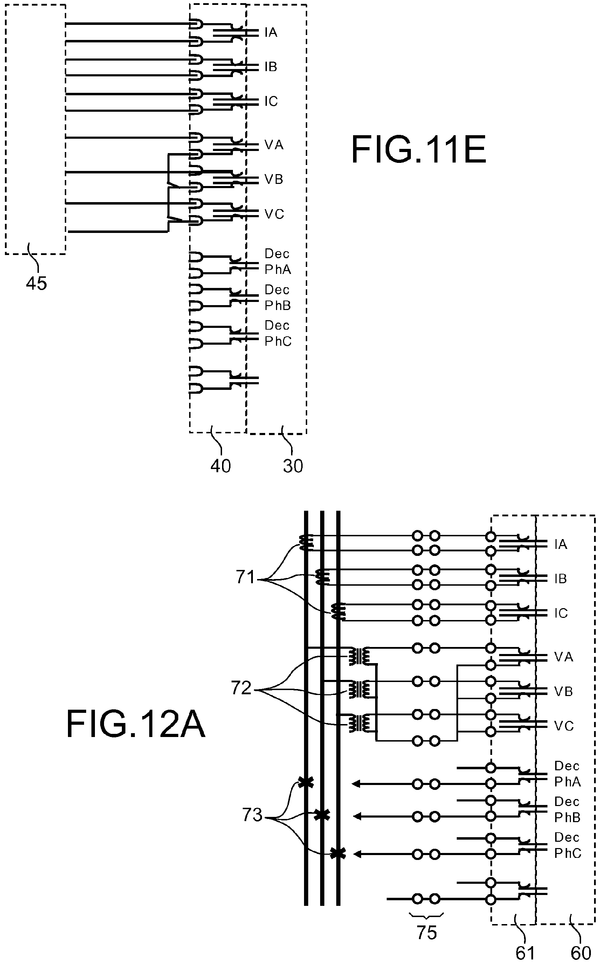

Sur les figures 9A et 9B, on retrouve le raccordement 62 aux transformateurs de courant et de tension et aux circuits de déclenchement, d'une partie active 60 sous la forme d'un « rack », par l'intermédiaire d'une partie embase 61 qui vient s'insérer sur une prise 67 de la partie active. Le raccordement aux transformateurs de courant et de tension se fait par l'intermédiaire d'un bornier interface 75 représenté en figure 12A.

Sur les figures 9C et 9D, une partie test 65 est insérée sur la prise 67 à la place de la partie embase 61. Sur cette partie test 65 sont insérées des fiches 66 permettant des essais fonctionnels par injection directe sur les circuits courant et tension du relais.

Le dispositif de l'invention, dans son premier et dans son second modes de réalisation, concerne ainsi une partie active 30 ou 60 munie d'une prise 35 ou 67 sur laquelle peut venir s'insérer :
- soit une partie embase 31 ou 61 reliée à la tension d'alimentation, aux transformateurs de courant et de tension et aux circuits de déclenchement lorsque le dispositif de protecton est en service, cette partie embase étant conçue de telle sorte que lorsqu'il y a désinsertion de la partie active, dans un premier temps, les circuits de déclenchement sont interrompus, puis, dans un second temps, les circuits transformateur de courant sont court-circuités et déconnectés de la partie active, et les circuits transformateur de tension sont déconnectés de la partie active,
- soit une partie test 40 ou 65 compatible également avec la prise 37 ou 67 de la partie active qui permet, lorsque la partie embase 31 ou 61 est déconnectée et la prise test 40 ou 65 insérée à sa place, d'injecter courants et tension sur la partie active à tester au moyen de fiches 45 ou 66.

L'invention permet donc d'utiliser une seule prise 35 ou 67 sur la partie active 30 ou 60 pour réaliser soit le raccordement de celle-ci sur la partie embase 31 ou 61, avec débrochage facile et sécurisé (pas de risque d'ouverture involontaire du circuit transformateur de courant ni de risque de déclenchement intempestif), soit la fonction prise test.

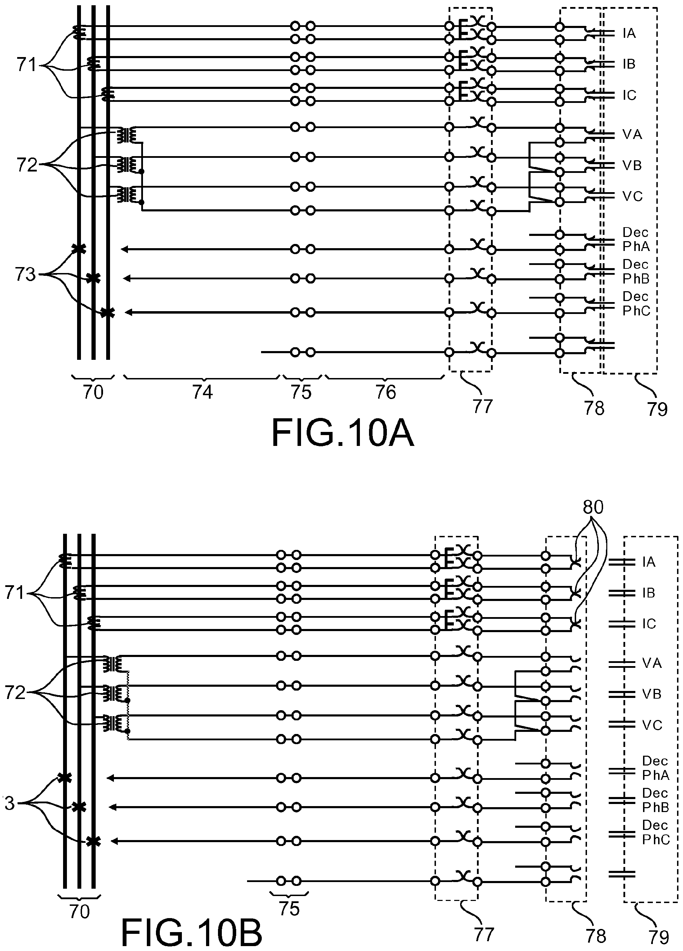

Les figures 10A et 10B représentent le circuit électrique d'un dispositif de l'art connu, la partie active (ou relais) 79 étant respectivement embrochée, ou débrochée. Ces figures illustrent successivement :
- trois conducteurs haute tension 70 de phases A, B et C,
- trois transformateurs de courant 71, disposés chacun sur une phase A, B ou C, qui permettent de passer, par exemple, de 3000 A à 1 A en régime nominal,
- trois transformateurs de tension 72, disposés chacun sur une phase A, B ou C, qui permettent de passer par exemple de 220 000 volts à 100 volts,
- trois disjoncteurs haute tension 73, disposés chacun sur une phase A, B ou C,
- un câble basse tension 74,
- un bornier intermédiaire 75,
- des conducteurs isolés 76,
- une boîte d'essai 77,
- un connecteur 78 de relais, et
- un relais 79 qui permet d'obtenir les courants IA, IB, IC et les tensions VA, VB et VC et de générer les signaux de déclenchement des disjoncteurs : DecPhA, DecPhB et DecPhC, avec pour chaque signal un contact haut et un contact bas comme décrit précédemment au vu des figures 6A à 6C. Sur la figure 10B, les lamelles souples 80 correspondant au circuit courant se sont refermées pour faire court-circuit.

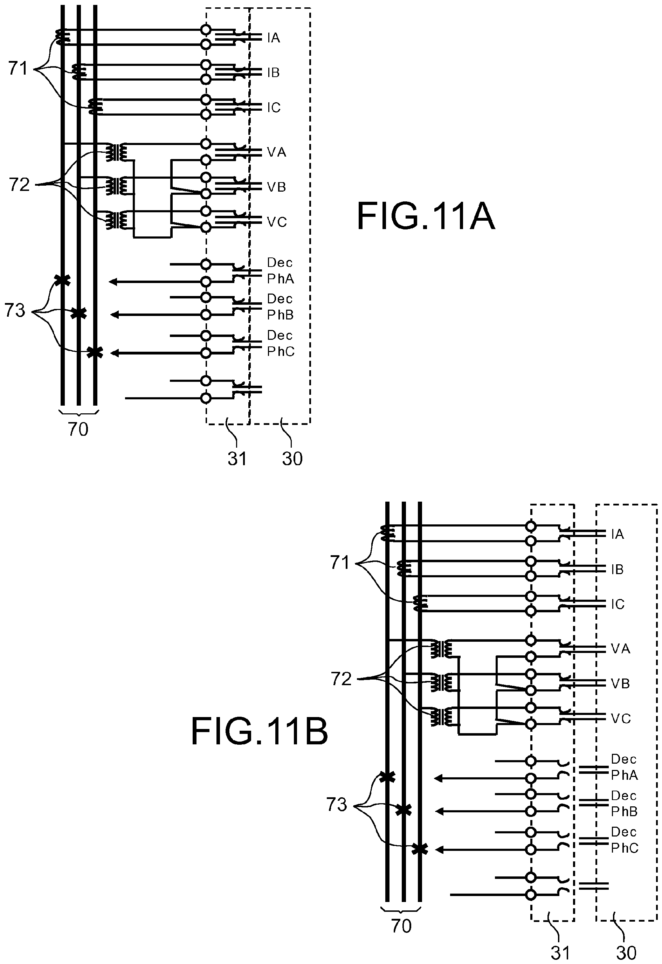

Les figures 11A à 11E représentent le circuit électrique du premier mode de réalisation du dispositif de l'invention avec un « rail » DIN, la partie active 30 étant embrochée dans la partie embase 31, comme illustré sur la figure 4A. Sur la figure 11A, il apparaît clairement que les contacts des circuits courant et tension sont plus allongés que ceux des circuits de déclenchement.

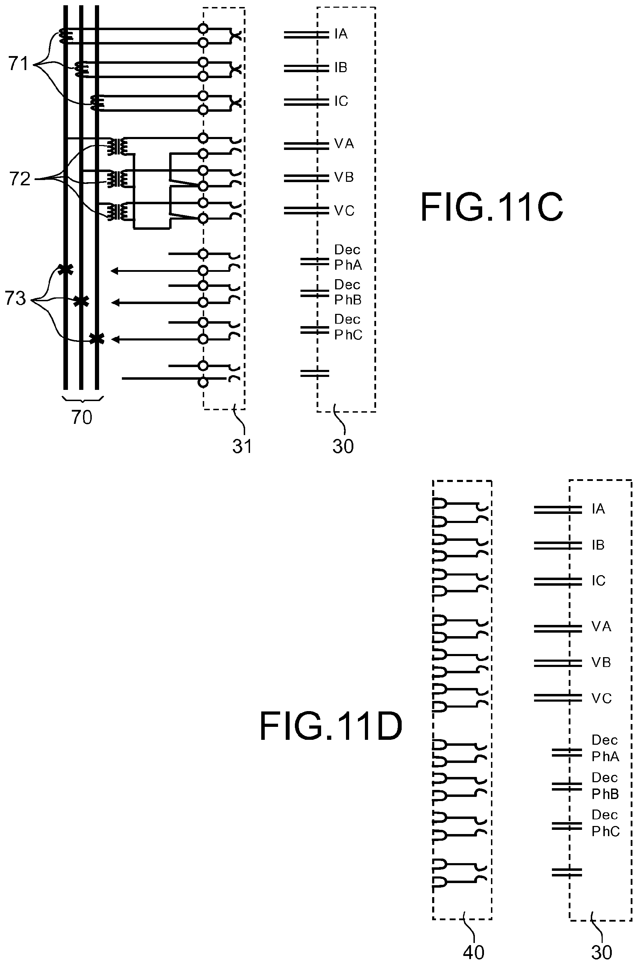

Sur les figures 11B et 11C, la partie active 30 est débrochée, partiellement et totalement, comme illustré sur la figure 4B, les circuits de déclenchement étant interrompus avant les circuits courant et tension.

Sur les figures 11D et 11E, la partie test 40 est embrochée, comme illustré respectivement sur les figures 5B et 5D.

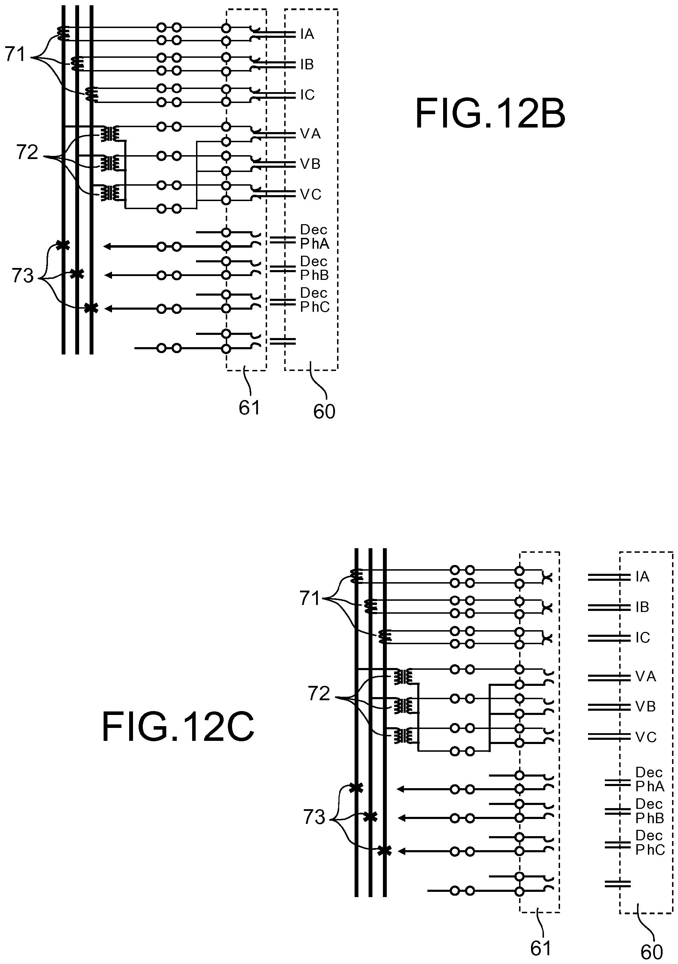

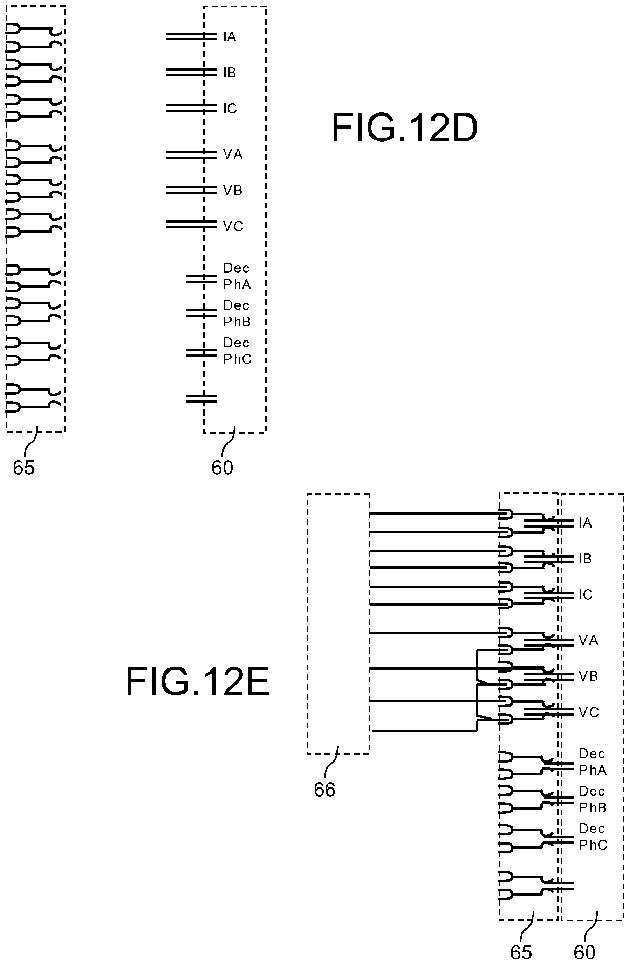

Les figures 12A à 12E représentent le circuit électrique du second mode de réalisation du dispositif de l'invention avec montage « rack ». Sur la figure 12A, la partie active est embrochée, comme illustré sur la figure 9A. Sur les figures 12B et 12C, la partie active est partiellement ou totalement débrochée, comme illustré sur la figure 10B. Sur les figures 12D et 12E, la prise test 65 est embrochée, comme illustré sur les figures 9C et 9D. La remarque faite ci-dessus au sujet de la longueur des contacts est également vérifiée.

### Références

[1] FR 2 062 734 ou US 3,696,296.

## Revendications

1. Dispositif pour détecter une défaillance dans un réseau électrique moyenne, haute ou très haute tension, comprenant au moins une liaison, ce dispositif comprenant :
- des moyens de raccordement direct à une alimentation, à des transformateurs de courant et de tension et à des circuits de déclenchement disposés sur une telle liaison, via des liaisons analogiques,
- des moyens de mesure en permanence des courants et tensions délivrés par ces transformateurs de courant et de tension,
- des moyens de conversion analogique-numérique reliés à une unité centrale de traitement, qui réalise la surveillance de ces courants et de ces tensions, via une liaison numérique, et qui commande les circuits de déclenchement,
**caractérisé en ce qu'**il comprend en outre :
- une partie embase (31 ; 61) avec un raccordement direct, via des liaisons analogiques (38), à la tension d'alimentation, aux transformateurs de courant et de tension et aux circuits de déclenchement,
- une partie active (30 ; 60) réalisant la conversion analogique-numérique munie d'au moins une prise (35 ; 67) apte à être insérée sur la partie embase,
- une partie test (40, 65) permettant d'injecter courants et tension, apte à être insérée sur une prise de la partie active.

2. Dispositif selon la revendication 1, dans lequel la partie active est reliée à l'unité centrale de traitement par une liaison numérique.

3. Dispositif selon la revendication 1, dans lequel l'unité centrale est intégrée dans la partie active.

4. Dispositif selon la revendication 1, dans lequel la prise (35) de la partie active est une prise sans contact.

5. Dispositif selon la revendication 1, dans lequel la prise (35) de la partie active comprend deux contacts (36) permettant de récupérer la tension d'alimentation disponible sur la partie embase (31) pour alimenter la partie active (30).

6. Dispositif selon la revendication 1, qui comprend des fiches (45 ; 66) aptes à venir s'insérer dans la partie test (40 ; 65).

7. Dispositif selon la revendication 1, dans lequel la partie embase (31) est fixée à un rail DIN (32)ou à tout système de fixation connu.

8. Dispositif selon la revendication 1, dans lequel la partie active (60) est montée en « rack » ou encastré dans une tôle en face avant d'une armoire

9. Dispositif selon l'une quelconque des revendications précédentes, dans lequel la liaison est une liaison triphasée, un transformateur de courant, un transformateur de tension et un circuit de déclenchement étant disposé sur chaque phase (A, B, C).

10. Procédé pour détecter une défaillance dans un réseau électrique moyenne, haute ou très haute tension, comprenant au moins une liaison, à l'aide d'un dispositif selon l'une des revendications 1 à 9,
ledit procédé comprenant les étapes suivantes, les moyens de raccordement direct et les moyens de conversion analogique-numérique étant insérés les uns dans les autres :
- une étape de désinsertion des moyens de raccordement direct et des moyens de conversion analogique-numérique, de telle manière que les circuits de déclenchement sont déconnectés en premier, les circuits transformateurs de courant étant ensuite refermés sur eux-mêmes et déconnectés en même temps que les circuits transformateurs de tension,
- une étape de test par injection secondaire de courant et de tension après insertion d'une partie test dans les moyens de conversion analogique-numérique de manière à les tester sans déclenchement des circuits de déclenchement.

11. Procédé selon la revendication 10, dans lequel :
- on insère une partie active (30 ; 60) permettant une conversion analogique-numérique dans une partie embase (31 ; 61) reliée à la tension d'alimentation, aux transformateurs de courant et de tension et aux circuits de déclenchement.

12. Procédé selon la revendication 11, dans lequel, au préalable, on relie cette partie active (30 ; 60) à l'unité centrale de traitement.

13. Procédé selon la revendication 11, dans lequel, dans une étape de test :
- on désinsère cette partie active (30 ; 60) de la partie embase (31 ; 61),
- on insère la partie test (40 ; 65) sur cette partie active (30 ; 60).

14. Procédé selon la revendication 13, dans lequel on retourne la partie active (30) et on l'insère à nouveau dans la partie embase (31).

15. Procédé selon l'une quelconque des revendications 11 à 14, dans lequel lorsque l'on désinsère la partie active (30, 60) de la partie embase (31, 61), les circuits de déclenchement sont interrompus dans un premier temps puis les circuits transformateurs de tension et courant sont interrompus ensuite.

## Patentansprüche

1. Vorrichtung zum Erkennen einer Störung in einem elektrischen Mittel-, Hoch- oder Höchstspannungsnetz mit zumindest einer Verbindung, wobei diese Vorrichtung enthält:
- Mittel zum direkten Anschluss an eine Stromversorgung, an Strom- und Spannungswandler und an Auslöseschaltkreise, die an einer solchen Verbindung angeordnet sind, über analoge Verbindungen,
- Mittel zur ständigen Messung der von diesen Strom- und Spannungswandlern gelieferten Ströme und Spannungen,
- Mittel zur Analog-Digital-Wandlung, die über eine digitale Verbindung mit einer zentralen Verarbeitungseinheit verbunden sind, die die Überwachung dieser Ströme und Spannungen durchführt und die Auslöseschaltkreise steuert,
**dadurch gekennzeichnet, dass** sie ferner enthält:
- ein Basisteil (31; 61) mit direktem Anschluss an die Versorgungsspannung, an die Strom- und Spannungswandler und an die Auslöseschaltkreise über analoge Verbindungen (38),
- ein Wirkteil (30; 60), das die Analog-Digital-Wandlung durchführt und mit zumindest einer zum Einsetzen an das Basisteil geeigneten Buchse (35; 67) versehen ist,
- ein Prüfteil (40, 65), das die Strom- und Spannungseinspeisung gestattet und dazu geeignet ist, an eine Buchse des Wirkteils eingesetzt zu werden.

2. Vorrichtung nach Anspruch 1, wobei das Wirkteil über eine digitale Verbindung mit der zentralen Verarbeitungseinheit verbunden ist.

3. Vorrichtung nach Anspruch 1, wobei die zentrale Einheit in das Wirkteil integriert ist.

4. Vorrichtung nach Anspruch 1, wobei die Buchse (35) des Wirkteils eine kontaktlose Buchse ist.

5. Vorrichtung nach Anspruch 1, wobei die Buchse (35) des Wirkteils zwei Kontaktstücke (36) enthält, mit denen die am Basisteil (31) verfügbare Versorgungsspannung zur Versorgung des Wirkteils (30) abgegriffen werden kann.

6. Vorrichtung nach Anspruch 1, enthaltend Stecker (45; 66), die dazu geeignet sind, in das Prüfteil (40; 65) eingesetzt zu werden.

7. Vorrichtung nach Anspruch 1, wobei das Basisteil (31) an einer DIN-Schiene (32) oder an jegliches bekannte Befestigungssystem befestigt ist.

8. Vorrichtung nach Anspruch 1, wobei das Wirkteil (60) in Einschubbauweise montiert oder in einem Blechteil an der Frontseite eines Schrankes eingebettet ist.

9. Vorrichtung nach einem der vorangehenden Ansprüche, wobei die Verbindung eine Dreiphasenverbindung ist, wobei an jeder Phase (A, B, C) ein Stromwandler, ein Spannungswandler und ein Auslöseschaltkreis angeordnet sind.

10. Verfahren zum Erkennen einer Störung in einem elektrischen Mittel-, Hoch- oder Höchstspannungsnetz, enthaltend zumindest eine Verbindung, mittels einer Vorrichtung nach einem der Ansprüche 1 bis 9,
wobei das Verfahren die folgenden Schritte umfasst, wobei die Mittel zum direkten Anschluss und die Mittel zur Analog-Digital-Wandlung ineinander eingesetzt werden:
- einen Schritt des Lösens der Mittel zum direkten Anschluss und der Mittel zur Analog-Digital-Wandlung derart, dass zuerst die Auslöseschaltkreise abgetrennt werden und dann die Stromwandlerschaltkreise in sich selbst geschlossen und gleichzeitig mit den Spannungswandlerschaltkreisen abgetrennt werden,
- einen Schritt des Prüfens durch sekundäre Einspeisung von Strom und Spannung nach dem Einsetzen eines Prüfteils in die Mittel zur Analog-Digital-Wandlung, um diese ohne Auslösung der Auslöseschaltkreise zu prüfen.

11. Verfahren nach Anspruch 10, wobei ein Wirkteil (30; 60), das eine Analog-Digital-Wandlung ermöglicht, in ein Basisteil (31; 61) eingesetzt wird, das mit der Versorgungsspannung, den Strom- und Spannungswandlern und den Auslöseschaltkreisen verbunden ist.

12. Verfahren nach Anspruch 11, wobei zunächst dieses Wirkteil (30; 60) mit der zentralen Verarbeitungseinheit verbunden wird.

13. Verfahren nach Anspruch 11, wobei in einem Prüfschritt
- dieses Wirkteil (30; 60) aus dem Basisteil (31; 61) herausgenommen wird,
- das Prüfteil (40; 65) an dieses Wirkteil (30; 60) eingesetzt wird.

14. Verfahren nach Anspruch 13, wobei das Wirkteil (30) umgedreht wird und es wieder in das Basisteil (31) eingesetzt wird.

15. Verfahren nach einem der Ansprüche 11 bis 14, wobei beim Herausnehmen des Wirkteils (30, 60) aus dem Basisteil (31, 61) zuerst die Auslöseschaltkreise und dann die Spannungs- und Stromwandlerschaltkreise unterbrochen werden.

## Claims

1. A device for detecting a fault in a medium, high, or very high voltage electrical network, comprising at least one link, the device comprising:
- connection means for direct connection to a power supply, to current and voltage transformers, and to trip circuits located on such a link via analog links,
- measuring means configured to continuously measure currents and voltages delivered by the current and the voltage transformers,
- analog to digital conversion means connected to a central processing unit, which achieves a monitoring of these currents and voltages, via a digital link, and which controls the trip circuits,
caracterised in that it further comprises:
• a base part (31, 61) directly connected, via analogic links (38), to the supply voltage, to the current and voltage transformers and to the trip circuits;
• an active part (30; 60) achieving the analogic-logical conversion having at least one socket (35; 67) configured for being connected to the base part;
• a test part (40, 60) for enabling currents and voltage to be injected and adapted to fit on a plug of the active part.

2. A device according to claim 1, wherein the active part (30; 60) is connected the central processing unit via an analog link.

3. A device according to claim 1, wherein the central processing unit is included into the active part.

4. A device according to claim 1, wherein the socket (35) of the active part is a contactless socket.

5. A device according to claim 1, wherein the socket (35) of the active part includes two contacts making it possible to recover the supply voltage available on the base part (31) to supply the active part (30).

6. A device according to claim 1, having plugs (45; 66) adapted to be inserted in the test part (40; 65).

7. A device according to claim 1, wherein the base part (31) is fixed to a DIN rail (32) or to any known fastening system.

8. A device according to claim 1, wherein the active part is rack-mounted or housed inside a metal panel of the front face of a cabinet.

9. A device according to any preceding claim, wherein said link is a three-phase link with a current transformer, a voltage transformer and a trip circuit being disposed in each phase (A, B, C).

10. A method of detecting a fault on a medium, high, or very high voltage electrical network, comprising at least one link, with a device according to any of claims 1 to 9,
said method comprising the following steps, direct connection means, and analog to digital conversion means being inserted inside each other:
• a step of separating said direct connection means from the digital conversion means, in such a way that the trip circuits are first disconnected, the current transformer circuits being subsequently short-circuited and disconnected at the same time as the voltage circuits;
• a step of testing by secondary injection of current and voltage after insertion of a test socket into said conversion means, whereby to test them without activating the trip circuits.

11. A method according to claim 10, wherein:
• an active part (30; 60), for conversion from analog to digital in a base part (31, 61) connected to the power supply, to the current and voltage transformer and to the trip circuits.

12. A method according to claim 11, wherein, the active part (30, 60) is first connected to the central processing unit.

13. A method according to claim 11, wherein, in a testing step:
• said active part (30; 60) is extracted from the base part (31; 61); and
• the test part (40; 65) is fitted on said active part (30; 60).

14. A method according to claim 13, wherein the active part (30) is turned round and inserted afresh into the base part (31).

15. A method according to any one of claims 11 to 14, wherein, when the active part (30) is extracted from the base part (31), the trip circuits are first interrupted, and the voltage and current transformer circuits are then interrupted.
